# EUROPEAN PATENT SPECIFICATION

(11) **EP 4 356 996 B1**
(45) Date of publication and mention of the grant of the patent: **19.08.2026**
(21) Application number: 23174228.9
(22) Date of filing: 19.05.2023
(51) Int. Cl.: B01D 3/16, B01D 3/22

(54) **A DUAL-FLOW TRAY FOR VAPOR-LIQUID CONTACTING, AND ITS USE**
DOPPELFLUSSBODEN FÜR DAMPF-FLÜSSIGKEITSKONTAKT UND SEINE VERWENDUNG
PLATEAU À DOUBLE FLUX POUR MISE EN CONTACT VAPEUR-LIQUIDE ET SON UTILISATION

(30) Priority: 21.10.2022 GB 202215667
(43) Date of publication of application: 24.04.2024
(73) Proprietor: Distillation Equipment Company Ltd, Stone Staffordshire ST15 8JZ (GB)
(72) Inventor: Aryan, Aadam, Stone, ST15 8JZ (GB)
(74) Representative: Swindell & Pearson Limited

(56) References cited:
- DE-A1- 2 060 178
- DE-A1- 2 649 774
- DE-C- 740 749
- GB-A- 1 240 471
- US-A- 2 767 966
- US-A- 2 944 009
- US-A- 3 589 689
- US-A1- 2020 061 491

## Description

### TECHNOLOGICAL FIELD

Examples of the disclosure relate to a dual-flow tray for vapor-liquid contacting, and its use.

### BACKGROUND

Trays for vapor-liquid contacting are used in vapor-liquid columns, such as fractional distillation columns and absorption columns. Trays for vapor-liquid contacting are widely used in the petrochemical and chemical industries amongst other industries. Such trays can be referred to as fractionation trays as they are used for the separation of volatile chemical compounds in fractional distillation columns.

One type of tray for vapor-liquid contacting is a one-pass cross-flow tray with open apertures (sieve holes). Liquid enters a flat tray at a side inlet area and flows cross-wise to the downcomer at the opposite side. The liquid flows downwards through the downcomer to a side inlet area of the tray below. The liquid then flows cross-wise to the downcomer at the opposite side in the opposite direction. The liquid thus descends downwards. The liquid is maintained on the tray due to the vapor pressure drop (dry pressure drop). The open apertures in the trays allow the upward movement of vapor.

A dual-flow tray does not have downcomers. The downward flow of liquid is via apertures in the tray. In operation a percentage of the apertures are passing vapor upwards whilst the remaining are passing liquid downwards. The fractional split (percentage) between holes passing vapour or liquid depends primarily on the vapor rate and density and the liquid rate and density.

Dual-flow trays have the advantages of superior fouling resistance and lower pressure drop. Despite this their use is not common because of perceived characteristics of low efficiency outside a narrow operating range.

With standard flat dual-flow or cross-flow trays using open apertures there are only two degrees of freedom in the design of the tray - the open aperture diameter and the total number of open apertures (open area). Increasing the open area of the tray increases the capacity but reduces the efficiency.

For a certain number of holes there is only a limited range of capacity operation where efficiency is maximized. This range is significantly narrower for standard flat dual-flow trays using open apertures compared to standard flat cross-flow trays using open apertures. Peak efficiencies are comparable. The narrow (sharp) efficiency profile of the dual-flow trays is one of the reasons many engineers are reluctant to use them.

Another reason many engineers are reluctant to use standard flat sieve dual-flow trays is that they are recognised to suffer from poor separation performance in large diameter columns (D > 1200 mm). The total head required to drive the liquid downwards through the open apertures must overcome the dry vapor pressure drop plus the wet pressure drop plus the head loss of liquid flowing through the holes. The head loss due to the liquid flow through the holes is very small compared to the dry vapor pressure drop and wet pressure drop. Hence, the performance of standard flat dual-flow trays is very sensitive to levelness. For large diameter columns a typical levelness tolerance for trays is D/1000. For example in a column of 3000mm diameter, the trays may be 3mm out of level. This sensitivity to levelness of standard flat dual-flow trays can lead to poor performance in large diameter columns. An example of a dual-flow tray is disclosed in DE740749C.

### BRIEF SUMMARY

According to various, but not necessarily all, examples there is provided examples as claimed in the appended claims.

According to various, but not necessarily all, examples there is provided a dual-flow tray for vapor-liquid contacting as defined in claim 1.

In some but not necessarily all examples, the first valves are static valves and the second valves are static valves.

In some but not necessarily all examples, the higher-relief portions are planar and/or the lower-relief portions are planar.

In some but not necessarily all examples, the planar higher-relief portions and the planar lower-relief portions have different areas.

In some but not necessarily all examples, the higher-relief portions have a lower total slot area than the lower-relief portions.

In some but not necessarily all examples, the higher-relief portions are formed as parallel elongate strips and the lower-relief portions are formed as parallel elongate strips.

In some but not necessarily all examples, the lower-relief portions form elongate channels and the higher-relief portions form elongates ridges between the elongate channels.

In some but not necessarily all examples, the elongate channels and the elongate ridges are lengthwise parallel and alternate.

In some but not necessarily all examples, the interconnecting portions each comprise one or more planar portions.

In some but not necessarily all examples, the higher-relief portions, the lower-relief portions and interconnecting portions form flat portions of a trapezoidal wave.

In some but not necessarily all examples, the higher-relief portions, the lower-relief portions and interconnecting portions form flat portions of an isosceles trapezoidal wave,

In some but not necessarily all examples, the first valves are associated with fluid flow paths having at least a first direction and second valves are associated with fluid flow paths having at least a second direction, wherein the first direction and the second direction are orthogonal.

In some but not necessarily all examples, each first valve is configured to create two opposing flow paths that combine and wherein each second valve is configured to create two opposing flow paths that combine.

In some but not necessarily all examples, there is a first number of first valves and a second number of second valves, and wherein the first number is different to the second number.

In some but not necessarily all examples, each higher-relief portion provides one or more first rows of first valves wherein the first valves are oriented in a first direction and the first rows extends in the first direction; and each lower-relief portion provides one or more second rows of second valves wherein the second valves are oriented in a second direction, orthogonal to the first direction, and the second rows extends in the first direction

In some but not necessarily all examples, each of the first valves comprises a first aperture and a fixed partial obstruction to the first aperture and wherein each of the second valves comprises an aperture and a fixed partial obstruction to the aperture.

In some but not necessarily all examples, each of the first valves comprises one or more legs supporting one or more raised cover portions at least partially covering a first aperture in the higher-relief portion and each
of the second valves comprise one or more legs supporting one or more raised cover portions at least partially covering a second aperture in the lower-relief portion.

In some but not necessarily all examples, each of the first valves comprise a higher-relief central cover portion over a first aperture, in the higher-relief portion, supported by two opposing legs extending from the higher-relief portion that creates two distinct flow paths through the first aperture in the higher-relief portion; and wherein each of the second valves comprises a higher-relief central cover portion over a second aperture, in the lower-relief portion, supported by two opposing legs extending from the lower-relief portion that creates two distinct flow paths through the second aperture in the lower-relief portion.

In some but not necessarily all examples, the dual-flow tray comprises at least two rows of open apertures in each interconnecting portions that interconnects between a high-relief portion and a low-relief portion.

According to various, but not necessarily all, examples there is provided a vapor-liquid column for vapor-liquid contacting comprising at least one dual-flow tray as claimed in any preceding claim or comprising multiple dual-flow trays as claimed in any preceding claim, wherein vertically adjacent trays are rotated at 90 degrees to each other.

In some but not necessarily all examples, each dual-flow tray is connected to a periphery rim. In some but not necessarily all examples, each of the multiple dual-flow trays are connected to a single periphery rim.

According to various, but not necessarily all, examples there is provided a method comprising:
performing fractional distillation using one or more of the dual-flow trays or the vapor-liquid column; and
further processing at least one fraction from the fractional distillation to make, as a direct product of the method, a commercial product.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1A shows an example of a dual-flow tray not according to the invention;
FIG. 1B shows an example of a dual-flow tray;
FIG. 1C shows an example of a dual-flow tray;
FIG. 2 shows an example of a dual-flow tray;
FIG. 3A shows a shape of a dual-flow tray in cross-sectional side view;
FIG. 3B shows a shape of a dual-flow tray in isometric view;
FIG. 4A shows an example of an open aperture in a dual-flow tray;
FIG. 4B shows an example of a valve in a dual-flow tray;
FIGs. 5A, 5B show an example of a static valve in a dual-flow tray;
FIGs. 6A, 6B, 6C, 6D show an example of a static valve in a dual-flow tray;
FIGs. 7A, 7B, 7C, 7D show an example of a static valve in a dual-flow tray;
FIGs. 8A, 8B, 8C show an example of a static valve in a dual-flow tray;
FIGs. 9A, 9B show an example of a static valve in a dual-flow tray;
FIGs. 10A, 10B show an example of a static valve in a dual-flow tray;
FIG 11 shows an example of a vapor-liquid column comprising dual-flow trays;
FIG 12 shows an example of a vapor-liquid column comprising dual-flow trays.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the Figs an orthogonal three dimensional Cartesian co-ordinate system (z=x ^ y) is used consistently.

In the following description a class (or set) can be referenced using a reference number without a subscript index (e.g. 10) and a specific instance of the class (member of the set) can be referenced using the reference number with a numerical type subscript index (e.g. 10_1) and a non-specific instance of the class (member of the set) can be referenced using the reference number with a variable type subscript index (e.g. 10_i).

### DETAILED DESCRIPTION

This description relates to a dual-flow tray 10. for vapor-liquid contacting. The dual-flow tray 10 comprises:
higher-relief portions 12 configured to provide first valves 20_1;
lower-relief portions 14 configured to provide second valves 20_2;
interconnecting portions 16 that interconnect the higher-relief portions 12 and the lower-relief portions 14.

The term 'relief' refers to elevation from a reference plane. It describes projection of a part from a plane on which it is formed.

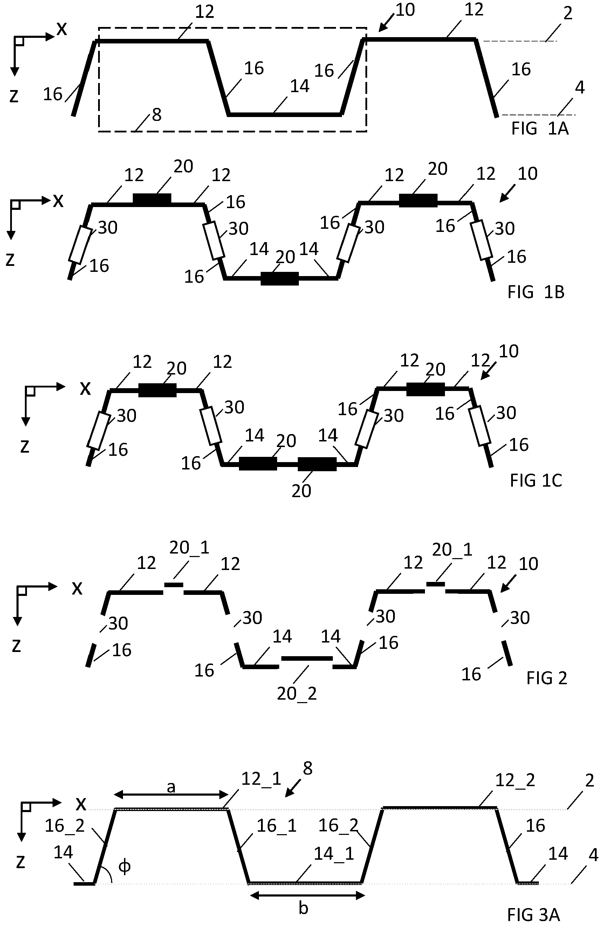

Referring to FIG 1A, in at least some examples, the higher-relief portions 12 are planar and the lower-relief portions 14 are planar. The higher-relief portions 12 lies in a first higher plane 2. The lower-relief portions 14 lie in a second lower plane 4.

The planar flat surfaces of the higher-relief portions 12 and the lower-relief portions 14 enables formation of valves 20 (not illustrated in FIG 1A).

The width of the higher relief portion 12 is less than the width of the lower-relief portion 14.

The dual-flow tray 10 extends substantially parallel to planes 2, 4 in the x-y plane.

The dual-flow tray 10 has a repeating pattern in a traverse x-direction that is formed by the repetition of repeat units 8.

Referring to FIG 1B and 1C, in at least some examples, the higher-relief portions 12 comprise valves 20 and the lower-relief portions 14 comprise valves 20. The interconnecting portions 16 comprise open apertures 30.

The number of valves 20 in each higher-relief portion 12 can be the same or lower to a number of valves 20 in each lower-relief portion 14. In FIG 1B the number of valves 20 in each higher-relief portion 12 is the same as a number of valves 20 in each lower-relief portion 14. In FIG 1C the number of valves 20 in each higher-relief portion 12 is the less than a number of valves 20 in each lower-relief portion 14.

The number of valves 20 per unit area (surface area density) in each higher-relief portion 12 is lower to the number of valves 20 per unit area (surface area density) in each lower-relief portion 14.

Referring to FIG 2, in at least some examples, the higher-relief portions 12 comprise static valves 20 and the lower-relief portions 14 comprise static valves 20. The interconnecting portions 16 comprise open apertures 30.

In FIG 2, the higher-relief portions 12 comprise first static valves 20_1 and the lower-relief portions 14 comprise second static valves 20_2.

The fluid flow path via the first static valves 20_1 has a different orientation to the fluid flow path via the second static valves 20_2. The first valves 20_1 are associated with a liquid flow path having at least a first direction and the second valves 20_2 are associated with a liquid flow path having at least a second direction where the first direction and the second direction are orthogonal.

The valves 20_1 in the higher-relief portions 12 have a first orientation and the valves 20_2 in the lower-relief portions 14 have a second different orientation, orthogonal to the first direction.

FIG 3A illustrates a cross-sectional shape of the dual-flow tray 10.

The planar higher-relief portions 12 have a width 'a' in the x-direction. The planar lower-relief portions 14 have a width 'b' in the x-direction. The value of 'a' is lower than the value of "b".

Each of the planar higher-relief portions 12 can have the same area. Each of the planar lower-relief portions 14 can have the same area. The area of each of the planar higher-relief portions 12 is lower than the area of each of the planar lower-relief portions 14.

The higher-relief portions 12, lower-relief portions 14 and interconnecting portions 16 are planar. The higher-relief portions 12, lower-relief portions 14 and interconnecting portions 16 form flat portions of a trapezoidal wave.

The dual-flow tray 10 of this cross-sectional shape can be described as a trapezoidal-wave ripple dual-flow tray.

The higher-relief portions 12 in combination with adjacent interconnecting portions 16 form a trapezoidal shape in cross-section. The adjacent interconnecting portions 16 form opposing sides of the trapezoidal shape and the higher-relief portion 12 forms an interconnecting side of the trapezoidal shape. The fourth side of the trapezoidal shape is open.

The lower-relief portions 14 in combination with adjacent interconnecting portions 16 form a trapezoidal shape in cross-section. The adjacent interconnecting portions 16 form opposing sides of the trapezoidal shape and the lower-relief portion 14 forms an interconnecting side of the trapezoidal shape. The fourth side of the trapezoidal shape is open.

The planar interconnecting portions 16_1, 16_2 have the same width. The higher-relief portions 12, lower-relief portions 14 and interconnecting portions 16 therefore form flat portions of an isosceles trapezoidal wave.

A repeat unit 8 is formed from a first higher-relief portion 12_1, a first interconnecting portion 16_1, a first lower-relief portion 14_1 and a second interconnecting portion 16_2.

The first higher-relief portion 12_1 is planar and lies in the first horizontal plane 2. A first interconnecting portion 16_1 is planar and lies in a first downwardly sloped plane. The first interconnecting portion 16_1 makes a reflex angle (180 + ϕ that is greater than 180 degrees and less than 270 degrees) to the first higher-relief portion 12. A first lower-relief portion 14_1 is planar and lies in the second horizontal plane 4. The first lower-relief portion 14_1 makes an obtuse angle (180- ϕ that is greater than 90 degrees and less than 180 degrees) to the first interconnecting portion 16. A second interconnecting portion 16_2 is planar and lies in a first upwardly sloped plane. The second interconnecting portion 16_2 makes an obtuse angle (180- ϕ that is greater than 90 degrees and less than 180 degrees) to the first lower-relief portion 14.

The first higher-relief portion 12_1 makes a reflex angle (180 + ϕ that is greater than 180 degrees and less than 270 degrees) to upwardly sloped second interconnecting portion 16_2 of the preceding repeat unit 8.

The upwardly sloped second interconnecting portion 16_2 makes a reflex angle (180 + ϕ that is greater than 180 degrees and less than 270 degrees) to first higher-relief portion 12_1 of the next repeat unit 8.

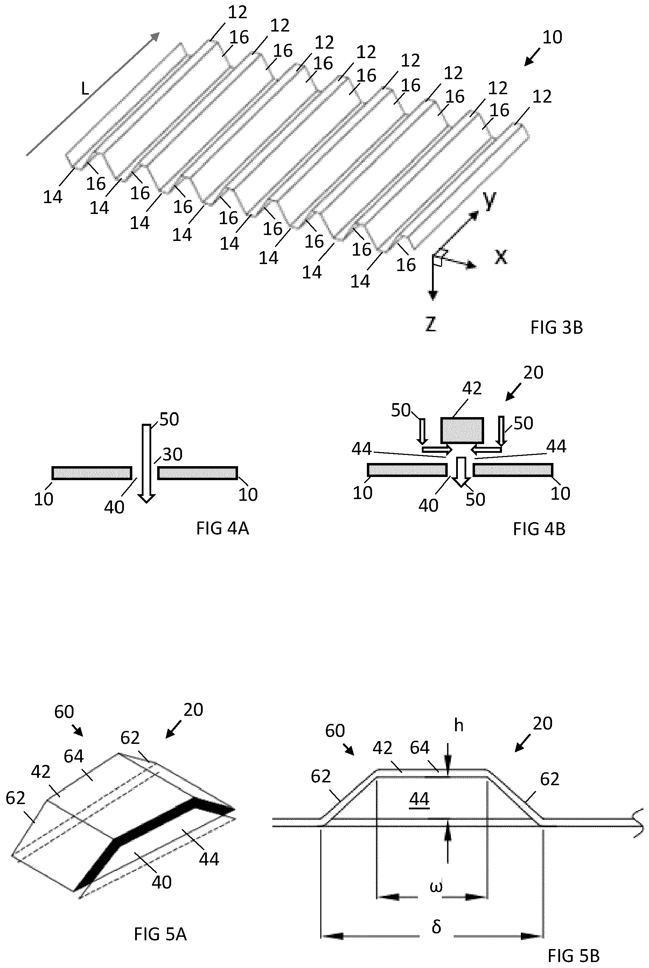

As illustrated in FIG 3B, the planar higher-relief portions 12 are formed as parallel elongate strips and the planar lower-relief portions 14 are formed as parallel elongate strips. The elongate planar higher-relief portions 12 have a constant width in the x-direction and extend lengthwise (L) in the y-direction. The elongate planar lower-relief portions 14 have a constant width in the x-direction and extend lengthwise (L) in the y-direction.

The planar lower-relief portions form elongate channels and the higher-relief portions form elongates ridges between channels. The elongate channels and the elongate ridges are lengthwise parallel and alternate. The dual-flow tray 10 therefore has a corrugated three-dimensional shape that comprises alternating elongate channels and elongate ridges. The channel and ridges extend in the same direction (y-direction) and alternate in the different orthogonal direction (x-direction).

The corrugation provides a levelness tolerance to the dual-flow tray 10.

The corrugation can be described as a trapezoidal corrugation. It comprises regularly spaced trapezoidal-shaped ridges separated by regularly spaced trapezoidal shaped channels (troughs). The trapezoidal-shaped ridges and trapezoidal shaped troughs alternate.

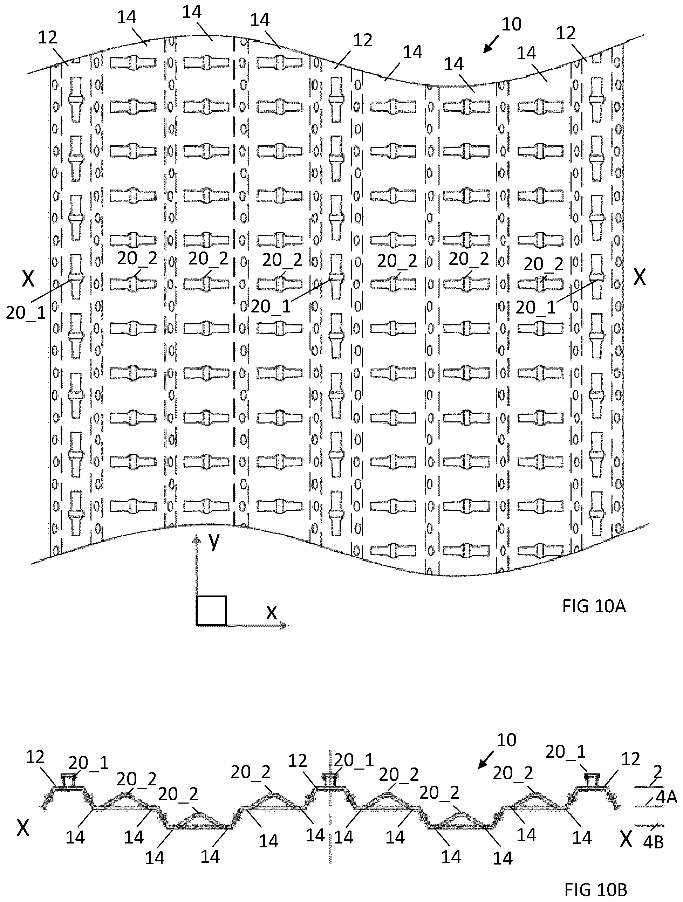

As illustrated in FIG 10B, a trapezoidal-shaped channel can comprise within it another trapezoidal shaped trough.

FIG 4A illustrates an example of an open aperture 30 in a dual-flow tray 10.

The open aperture 30 is a through-hole that extends fully through the dual-flow tray 10. There is no obstruction to liquid flow 50 obscuring the through-hole.

FIG 4B illustrates an example of a static valve 20 in a dual-flow tray 10.

The static valve 20 comprises an aperture 40. The aperture 40 is a through-hole that extends fully through the dual-flow tray 10. There is a fixed obstruction 42 to liquid flow 50 that obscuring the through-hole.

The static valve is configured to create two opposing flow paths 50 around the obstruction 42 that combine into a single flow path through the aperture 40.

The static valve 20 is static in that it is given a fixed configuration that is not changed during use.

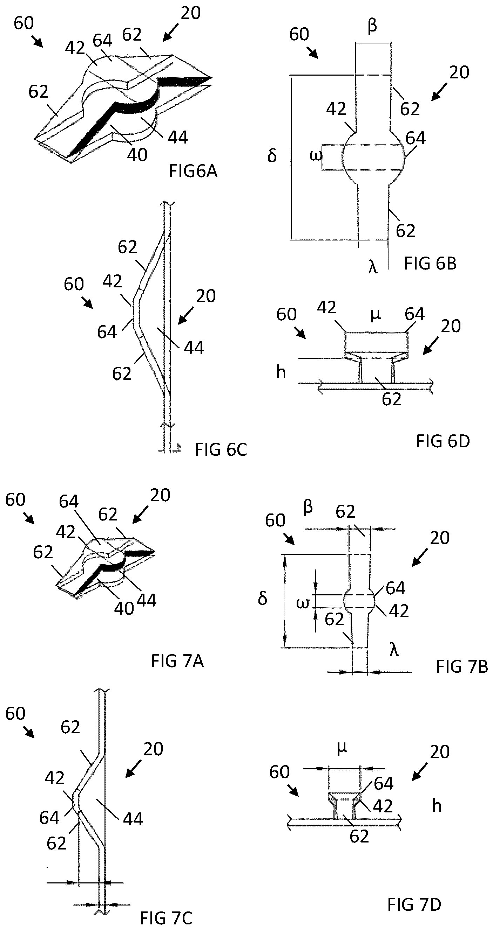

FIGs. 5A, 5B shows an example of a static valve in a dual-flow tray. FIGs. 6A, 6B, 6C, 6D shows another example of a static valve in a dual-flow tray. FIGs. 7A, 7B, 7C, 7D show another example of a static valve in a dual-flow tray. The static valves 20 illustrated can be formed in the higher-relief portions 12. The static valves 20 illustrated can be formed in the lower-relief portions 14.

FIG 5A is an isometric view and FIG 5B is a side view. FIG 6A is an isometric view, FIG 6B is a plan view, FIG 6C is a side view, and FIG 6D is an end view. FIG 7A is an isometric view, FIG 7B is a plan view, FIG 7C is a side view, and FIG 7D is an end view.

The static valves 20 comprise one or more legs 62 supporting one or more raised cover portions 64 at least partially covering the apertures 40. The combination of legs 62 and cover portion 64 form a fixed obstruction of an aperture 40.

Each of the static valves 20 comprise a higher-relief central cover portion 64 over an aperture 40 supported by two opposing legs 62 extending from a plane 2, 4 of the tray 10 that creates two distinct flow paths 44 to the aperture 40.

Flow path area 44 is the slot area of a static valve whereas aperture 40 is the orifice area. It is the slot area 44 that usually governs the performance characteristics of a static valve tray.

Equivalent dimensions are labelled β, δ, ω, λ, µ, h. The dimension β is a width of one leg 62. The dimension λ is a width of another leg 62. The dimension ω is length of a cover portion 64. The dimension µ is a width if the cover portion 64. The dimension δ is a combined length of the legs 62 and the cover portion 64. The dimension h is a height of the cover portion 64 from the foot of the legs 62.

The static valves 20 are formed by making two elongate cuts of length δ. The strip of material between the cuts is bent to create the aperture 40 and also create the cover portion 64 supported by opposing legs 62 that forms a partial obstruction to the aperture 40. The elongate cuts can be formed by punching a metal blank. The blank is stiff enough to retain shape but malleable enough to be bent during manufacture.

Static valves 20 provide an additional degree of design freedom compared to open apertures 30. The size of the cross-sections of the flow paths 44 can be controlled by controlling a height h of the cover portion 64 above the foot of the legs 62 where they join the blank. The height h can be varied to suit the vapour flows per level. This feature will further improve the operating range (flexibility).

Since liquid will preferentially descend downwards in the column from lower-relief portion 4, it is advantageous to have a larger total slot area 44 at the lower-relief portion 4 compared to higher-relief portion 2, promoting better contact between vapor and liquid thus improving the efficiency.

The choice between open aperture 30 and static valve 20 controls the upward movement of vapor, and the downward movement of liquid and effects both the hydraulic and mass transfer (efficiency) performance of the tray 10. With an open aperture 30 vapor enters the liquid on the tray vertically. This generates a certain amount of entrainment. With a valve 20, the vapor enters the liquid on the tray 10 horizontally. This reduces the entrainment thus improving capacity and efficiency. Entrainment not only reduces the capacity but also the efficiency of a tray due to back-mixing of liquid (of a lighter fraction) to a higher tray. Any reduction of entrainment will improve the tray efficiency. Thus the use of fixed valves 20, particularly the smaller sizes, will improve tray efficiency due to a reduction in the entrainment.

The liquid flowing downwards through a fixed valve 20 must make two 90 degree turns compared to a open aperture 30. This increases the head loss thus increasing the clear liquid height (hold-up). As a result not only is the liquid side mass transfer coefficient increased further improving the tray efficiency but the sensitivity to levelness is reduced.

The use of fixed valves 20 also increases the aeration of the liquid i.e., reduces the froth density compared to a open apertures 30. This increases the froth height which increases the gas residence time thus improving the gas side mass transfer coefficient and consequently the tray efficiency.

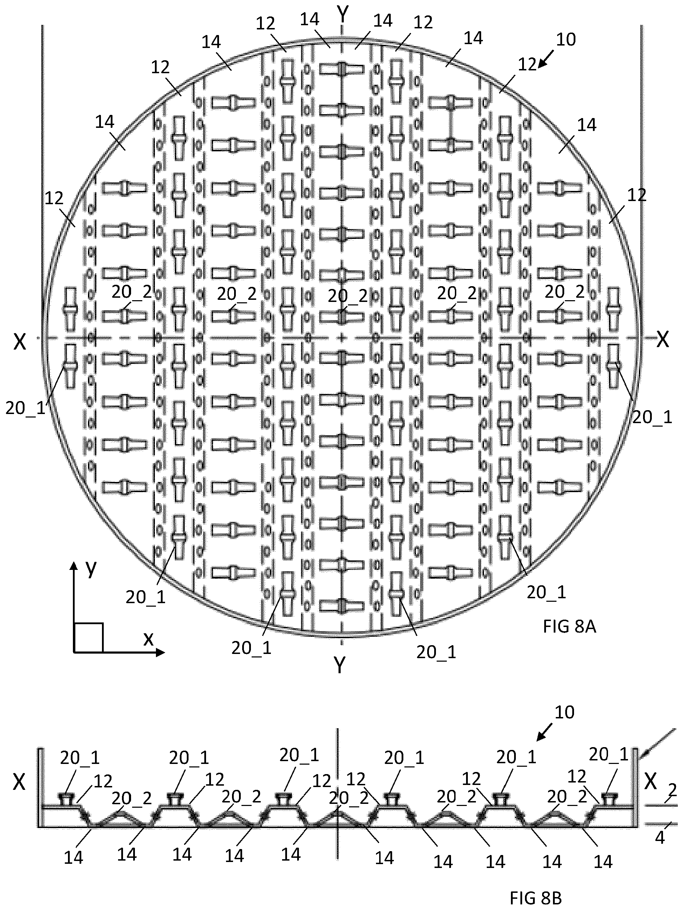

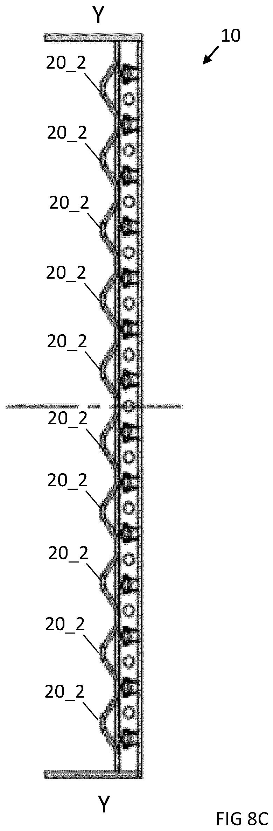

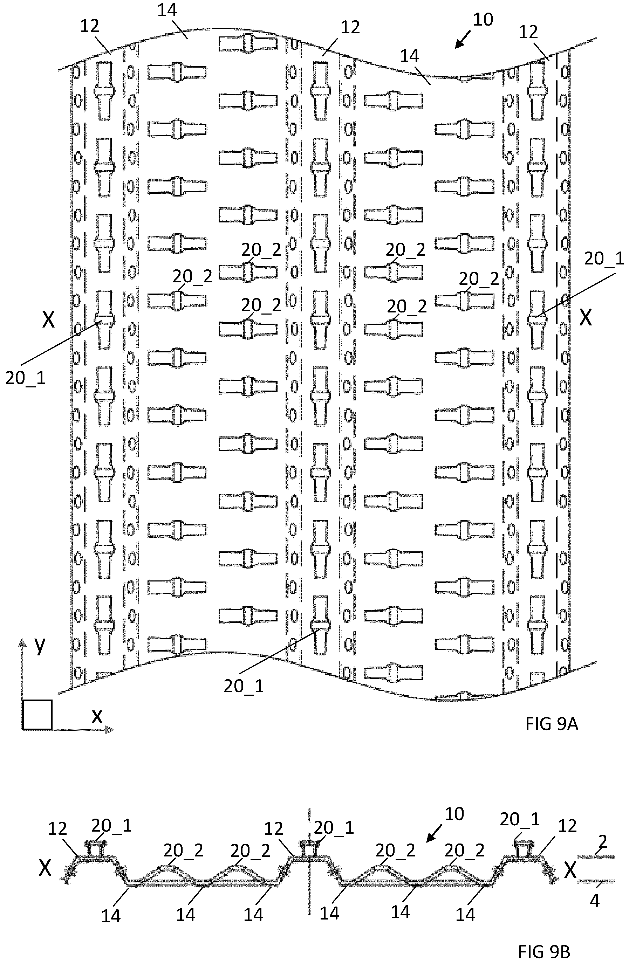

FIGs. 8A, 8B, 8C show an example of a dual-flow tray 10. FIGs. 9A, 9B show another example of a dual-flow tray 10. FIGs. 10A, 10B show another example of a dual-flow tray 10.

FIG 8A is a plan view, FIG 8B is a first side view, and FIG 8C is a second side view. FIG 9A is a plan view and FIG 9B is a first side view. FIG 10A is a plan view and FIG 10B is a first side view.

The dual-flow tray 10 comprises: higher-relief portions 12 providing first static valves 20_1; lower-relief portions 14 providing second static valves 20_2; interconnecting portions 16 that interconnect the higher-relief portions 12 and the lower-relief portions 14 and provide open apertures 30.

The higher-relief portions 12, lower-relief portions 14 and interconnecting portions 16 form flat portions of a trapezoidal wave. The dual-flow tray 10 of this cross-sectional shape can be described as a trapezoidal-wave ripple dual-flow tray.

The first static valves 20_1 are aligned in a parallel configuration. The second static valves 20_2 are aligned in a parallel configuration that is orthogonal to the parallel configuration of the first static valves 20_1

The first static valves 20_1 have partially covered elongate apertures. The elongate partial cover is formed from cover portion 64 and opposing legs 62, for example, as previously described. The partial cover and the apertures are elongate in the y-direction.

The second static valves 20_2 have partially covered elongate apertures. The elongate partial cover is formed from cover portion 64 and opposing legs 62, for example, as previously described. The partial cover and the apertures are elongate in the x-direction.

The first static valves 20_1 therefore have a first orientation and the second static valves 20_2 have a second orientation that is orthogonal to the first orientation. The first static valves 20_1 are aligned with the ridges. The second static valves 20_1 are cross-aligned with the channels.

Each higher-relief portion 12 provides one or more rows of first static valves 20_1 The first static valves 20_1 are oriented in a first direction (y-direction) and the row extends in the first direction (y-direction).

Each lower-relief portion 14 provides one or more rows of second static valves 20_2 The second static valves 20_2 are oriented in a second direction (x-direction), orthogonal to the first direction (y-direction), and the row extends in the first direction (y-direction).

FIGs 8A, 8B, 8C show an example of a dual-flow tray 10. The illustrated dual flow tray is suitable for use in a small (429mm ID) column.

The tray 10 has the following features:
a. a trapezoidal wave which provides two flat surfaces- top plane 2 (at the peak 12) and bottom plane 4 (at the trough 14). The depth of the wave may be adjusted to suit the liquid flow (and the size of column). It is envisaged at least four depths will be used ½", ¾", 1" and 1½".
b. The flat surfaces 12, 14 allow formation of fixed valves 20 which may be of any size
c. The fixed valves 20_2 located in the bottom plane 4 (troughs 14) are perpendicular whilst the fixed valves 20_1 at the top plane 2 (peak 12) are parallel to the plane. The varied orientation improves aeration of the liquid compared to round open apertures.
d. Each side 16 of the trapezoidal wave is perforated with at least two rows of open apertures 30 (adjustable size).
e. The fixed valve 20_2 orientations used result in more valves located in the troughs 14. This is desirable as more vapour can be made to flow through the troughs 14. As liquid preferably collects in the troughs 14 and leaves from there, the contact between liquid and vapour on vertically adjacent trays 10 is improved which will increase efficiency.
f. Use of fixed valves 20 allows an additional degree of freedom compared to open apertures 30- the slot height h (opening) can be varied to suit the vapour flows per level. This feature will further improve the operating range (flexibility).

In FIG 9A and 9B, each lower-relief portion 14 provides two rows of second static valves 20_2. The second static valves 20_2 are oriented in a second direction (x-direction), orthogonal to the first direction (y-direction), and the row extends in the first direction (y-direction). Two rows of static valves 20_2 are used side-by-side in the troughs 14. This is useful for large diameter columns (D > 2000 mm).

As illustrated in FIG 10B, a trapezoidal-shaped channel can comprise within it another trapezoidal shaped trough. The fixed valves 20_2 orientated perpendicularly in the bottom trough or middle level whilst at the peak/ridge the fixed valves 20_1 are parallel to the wave.

The dual-flow tray 10 is a two-stage trapezoidal wave. This results in the valves 20 located at three levels. This is envisaged for very large diameter columns (D > 3000 mm) with high liquid loads. The use of three levels will further improve the operating range.

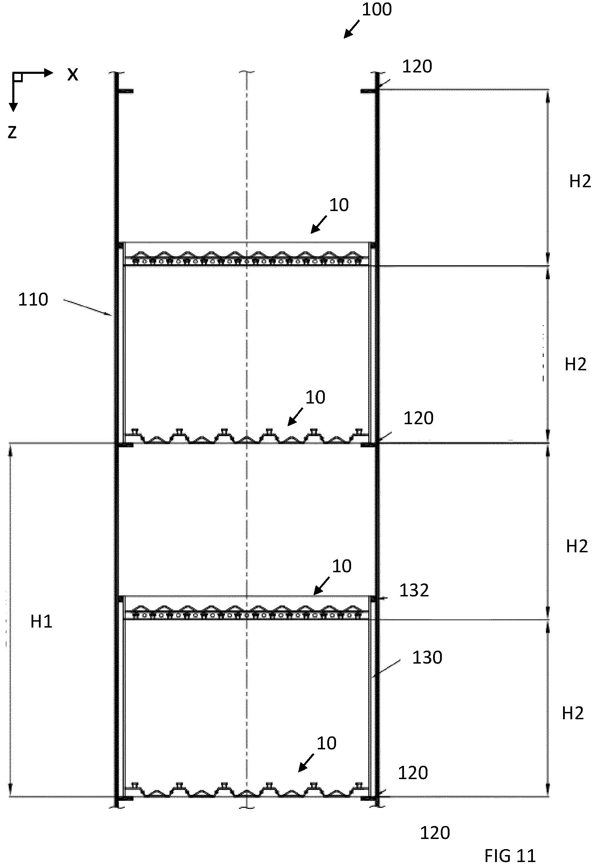

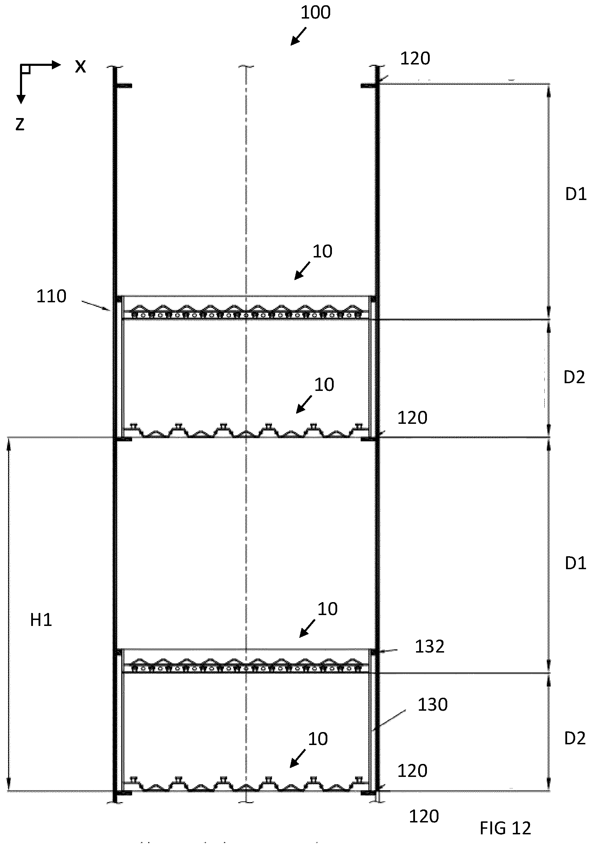

FIGs 11 and 12 show examples of a vapor-liquid column 100 for vapor-liquid contacting comprising dual-flow trays 10.

Trays for vapor-liquid contacting are used in vapor-liquid columns, such as fractional distillation columns and absorption columns. Trays for vapor-liquid contacting are used in the petrochemical and chemical industries amongst other industries.

The column 100 comprises a column shell 110. The interior of the column 100 has multiple support rings 120. Each support ring 120 supports at least one dual-flow tray 10. A gasket seal 132 seals a gap between the support rim 130 and column shell.

Vertically adjacent trays 10 are rotated 90 degrees to each other and as such the trapezoidal waves provide redistribution of liquid.

The dual-flow trays 10 are tack-welded to a periphery rim 130. The trays 10 can be made of sections framed by a vertical rim 130 to which the trays 10 are tack-welded. The sections are of a width to permit passage through a column man-hole (usually 18-in. to 24-in.).

Two trays are welded to the same rim 130 thus allowing an increase in the no. of trays without the need of welding new support rings 120 or the use of surrogate support rings.

The design of any distillation column is split into process and hydraulic design. The process design establishes the number of theoretical stage stages (NTS) required for a given separation whilst the hydraulic design establishes the design of the trays or packing and internals used.

For a trayed column, the actual number of trays required is the NTS divided by the tray efficiency (overall column/section basis). The NTS is dependent on the reflux ratio used. It is customary to design the column with a reflux ratio of approximately 1.1 to 1.2 times the minimum reflux ratio.

An increase in tray efficiency may be used to improve the separation. Alternatively it may be used reduce the reflux ratio thus reducing the operating costs.

In many revamp cases it may be desirable to increase the NTS by increasing the number of actual trays.

In FIG 11, two trays (of any type) are attached to the same support rim 130. In the example, an original tray spacing of H1 is divided equally to a tray spacing of H2. The space H2 between vertically adjacent trays is the same. In some examples, H1 is 600mm and H2 is 300mm.

The use of dual trays as a deck supported by a support rim 130 increases the number of trays whilst utilising existing support rings 120 without the need for welding new support rings or the use of surrogate support rings.

In FIG 12, two trays (of any type) are attached to the same support ring 130.

In the example, an initial tray spacing of H1 is divided non-equally to a tray spacings of D1, D2. In some examples, H1 is 600mm, D1 is 400mm and D2 200mm. The original tray spacing of 600mm is divided unequally, 400mm for the higher tray and 200mm for the lower tray. With a smaller tray spacing for the lower tray, operation will be near to or at flood conditions.

A larger tray spacing will give higher capacity reducing the column diameter. The relationship between capacity and tray spacing is not linear but rather follows a square root function. However, it is customary to select the tray spacing based on mechanical (installation) considerations rather than capacity. Furthermore it is customary to use a uniform tray spacing in each section of the column (below & above feeds or draw offs).

There is also disclosed a method for performing fractional distillation using one or more dual-flow trays 10 and/or the columns 100 and then further processing at least one fraction from the fractional distillation to make, as a direct product of the method, a commercial product. The commercial product can, for example, be a hydrocarbon. The commercial product can, for example, be fuel.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The dual-flow trays 10 can be modules.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

## Claims

1. A dual-flow tray (10) for vapor-liquid contacting, wherein the dual-flow tray does not comprise downcomers, comprising:
higher-relief portions (12) comprising first valves (20_1);
lower-relief portions (14) comprising second valves (20_2),
wherein the number of first valves (20_1) per unit area in each higher-relief portion (12) is lower than the number of second valves (20_2) per unit area in each lower-relief portion (14); and
interconnecting portions (16) that interconnect the higher-relief portions (12) and the lower-relief portions (14),
wherein the interconnecting portions (16) comprise open apertures (30).

2. A dual-flow tray as claimed in claim 1, wherein the first valves are static valves and the second valves are static valves, and comprising open apertures in the interconnecting portions.

3. A dual-flow tray as claimed in claim 1 or 2, wherein the higher-relief portions are planar and/or the lower-relief portions are planar;
wherein optionally the planar higher-relief portions and the planar lower-relief portions have different areas.

4. A dual-flow tray as claimed in any preceding claim, wherein at least one of:
the higher-relief portions have a lower total slot area than the lower-relief portions;
the higher-relief portions are formed as parallel elongate strips and the lower-relief portions are formed as parallel elongate strips.

5. A dual-flow tray as claimed in any preceding claim, wherein the lower-relief portions form elongate channels and the higher-relief portions form elongates ridges between the elongate channels;
wherein optionally the elongate channels and the elongate ridges are lengthwise parallel and alternate.

6. A dual-flow tray as claimed in any preceding claim, wherein the interconnecting portions each comprise one or more planar portions.

7. A dual-flow tray as claimed in any preceding claim, wherein the higher-relief portions, the lower-relief portions and interconnecting portions form flat portions of, at least one of: a trapezoidal wave; an isosceles trapezoidal wave.

8. A dual-flow tray as claimed in any preceding claim, wherein each of the first valves are static valves comprising a first aperture and a fixed partial obstruction to the first aperture, wherein the first aperture and the first fixed partial obstruction to the first aperture are configured to create two opposing flow paths that combine, and wherein each of the second valves are static valves comprising a second aperture and a second fixed partial obstruction to the aperture, wherein the second aperture and the second fixed partial obstruction to the first aperture are configured to create two opposing flow paths that combine.

9. A dual-flow tray as claimed in any preceding claim, wherein each higher-relief portion provides one or more first rows of first valves wherein each of the first valves are static valves comprising a first aperture and a fixed partial obstruction to the first aperture, and wherein the first apertures are oriented in a first direction and the first rows extends in the first direction; and each lower-relief portion provides one or more second rows of second valves, wherein each of the second valves are static valves comprising a second aperture and a fixed partial obstruction to the second aperture, wherein the second apertures are oriented in a second direction, orthogonal to the first direction, and the second rows extends in the first direction.

10. A dual-flow tray as claimed in any preceding claim, comprising open apertures in the interconnecting portions;
optionally comprising at least two rows of open apertures in each of the interconnecting portions that interconnects between a high-relief portion and a low-relief portion.

11. A vapor-liquid column (100) for vapor-liquid contacting comprising multiple dual-flow trays (10) as claimed in any preceding claim, wherein vertically adjacent trays are rotated at 90 degrees to each other;
wherein optionally each dual-flow tray (10) is connected to a periphery rim (120).

12. A method comprising:
performing fractional distillation using one or more a dual-flow trays (10) as claimed in any of claims 1 to 10 or a vapor-liquid column (100) as claimed in claim 11; and
further processing at least one fraction from the fractional distillation to make, as a direct product of the method, a commercial product.

## Patentansprüche

1. Doppelflussboden (10) für Dampf-Flüssigkeitskontakt, umfassend, wobei der Doppelflussboden keine Ablaufstutzen umfasst:
höhere Reliefabschnitte (12), die erste Ventile (20_1) umfassen;
niedrigere Reliefabschnitte (14), die zweite Ventile (20_2) umfassen,
wobei die Anzahl an ersten Ventilen (20_1) pro Flächeneinheit in jedem höheren Reliefabschnitt (12) niedriger als die Anzahl an zweiten Ventilen (20_2) pro Flächeneinheit in jedem niedrigeren Reliefabschnitt (14) ist; und
Miteinanderverbindungsabschnitte (16), welche die höheren Reliefabschnitte (12) und die niedrigeren Reliefabschnitte (14) miteinander verbinden,
wobei die Miteinanderverbindungsabschnitte (16) offene Öffnungen (30) umfassen.

2. Doppelflussboden nach Anspruch 1, wobei die ersten Ventile statische Ventile sind und die zweiten Ventile statische Ventile sind, und umfassend offene Öffnungen in den Miteinanderverbindungsabschnitten.

3. Doppelflussboden nach Anspruch 1 oder 2, wobei die höheren Reliefabschnitte planar sind und/oder die niedrigeren Reliefabschnitte planar sind;
wobei optional die planaren höheren Reliefabschnitte und die planaren niedrigeren Reliefabschnitte unterschiedliche Flächen aufweisen.

4. Doppelflussboden nach einem vorhergehenden Anspruch, wobei zumindest eines von Folgendem gilt:
die höheren Reliefabschnitte weisen eine niedrigere Gesamtschlitzfläche als die niedrigeren Reliefabschnitte auf;
die höheren Reliefabschnitte sind als parallele längliche Streifen gebildet und die niedrigeren Reliefabschnitte sind als parallele längliche Streifen gebildet.

5. Doppelflussboden nach einem vorhergehenden Anspruch, wobei die niedrigeren Reliefabschnitte längliche Kanäle bilden und die höheren Reliefabschnitte längliche Rippen zwischen den länglichen Kanälen bilden;
wobei optional die länglichen Kanäle und die länglichen Rippen längs parallel sind und sich abwechseln.

6. Doppelflussboden nach einem vorhergehenden Anspruch, wobei die Miteinanderverbindungsabschnitte jeweils einen oder mehrere planare Abschnitte umfassen.

7. Doppelflussboden nach einem vorhergehenden Anspruch, wobei die höheren Reliefabschnitte, die niedrigeren Reliefabschnitte und die Miteinanderverbindungsabschnitte flache Abschnitte von zumindest einem von Folgendem bilden: einer trapezförmigen Welle; einer gleichschenkligen trapezförmigen Welle.

8. Doppelflussboden nach einem vorhergehenden Anspruch, wobei jedes von den ersten Ventilen statische Ventile sind, die eine erste Öffnung und eine feste Teilbehinderung zu der ersten Öffnung umfassen, wobei die erste Öffnung und die erste feste Teilbehinderung zu der ersten Öffnung dazu konfiguriert sind, zwei gegenüberliegende Flusswege zu schaffen, die sich kombinieren, und wobei jedes von den zweiten Ventilen statische Ventile sind, die eine zweite Öffnung und eine zweite feste Teilbehinderung zu der Öffnung umfassen, wobei die zweite Öffnung und die zweite feste Teilbehinderung zu der ersten Öffnung dazu konfiguriert sind, zwei gegenüberliegende Flusswege zu schaffen, die sich kombinieren.

9. Doppelflussboden nach einem vorhergehenden Anspruch, wobei jeder höhere Reliefabschnitt eine oder mehrere erste Reihen von ersten Ventilen bereitstellt, wobei jedes von den ersten Ventilen statische Ventile sind, die eine erste Öffnung und eine feste Teilbehinderung zu der ersten Öffnung umfassen, und wobei die ersten Öffnungen in einer ersten Richtung ausgerichtet sind und sich die ersten Reihen in der ersten Richtung erstrecken; und jeder niedrigere Reliefabschnitt eine oder mehrere zweite Reihen von zweiten Ventilen bereitstellt, wobei jedes von den zweiten Ventilen statische Ventile sind, die eine zweite Öffnung und eine feste Teilbehinderung zu der zweiten Öffnung umfassen, wobei die zweiten Öffnungen in einer zweiten Richtung, orthogonal zu der ersten Richtung, ausgerichtet sind und sich die zweiten Reihen in der ersten Richtung erstrecken.

10. Doppelflussboden nach einem vorhergehenden Anspruch, umfassend offene Öffnungen in den Miteinanderverbindungsabschnitten;
wobei optional der Doppelflussboden zumindest zwei Reihen von offenen Öffnungen in jedem der Miteinanderverbindungsabschnitte umfasst, der zwischen einem hohen Reliefabschnitt und einem niedrigen Reliefabschnitt miteinander verbindet.

11. Dampf-Flüssigkeitssäule (100) für Dampf-Flüssigkeitskontakt, umfassend mehrere Doppelflussböden (10) nach einem vorhergehenden Anspruch, wobei vertikal benachbarte Böden um 90 Grad zueinander gedreht sind;
wobei optional jeder Doppelflussboden (10) mit einem Umfangsrand (120) verbunden ist.

12. Verfahren, umfassend:
Durchführen von fraktionierter Destillation unter Verwendung von einem oder mehreren Doppelflussböden (10) nach einem der Ansprüche 1 bis 10 oder einer Dampf-Flüssigkeitssäule (100) nach Anspruch 11; und ferner Verarbeiten von zumindest einer Fraktion aus der fraktionierten Destillation, um als direktes Produkt des Verfahrens ein kommerzielles Produkt herzustellen.

## Revendications

1. Plateau à double flux (10) pour mise en contact vapeur-liquide comprenant, ledit plateau à double flux ne comprenant pas de trop-pleins :
des parties de relief supérieur (12) comprenant des premières soupapes (20_1) ;
des parties de relief inférieur (14) comprenant des secondes soupapes (20_2),
ledit nombre de premières soupapes (20_1) par unité de surface dans chaque partie de relief supérieur (12) étant inférieur au nombre de secondes soupapes (20_2) par unité de surface dans chaque partie de relief inférieur (14) ; et
des parties d'interconnexion (16) qui relient les parties de relief supérieur (12) et les parties de relief inférieur (14),
lesdites parties d'interconnexion (16) comprenant des orifices ouverts (30).

2. Plateau à double flux selon la revendication 1, lesdites premières soupapes étant des soupapes statiques et lesdites secondes soupapes étant des soupapes statiques, et comprenant des orifices ouverts dans les parties d'interconnexion.

3. Plateau à double flux selon la revendication 1 ou 2, lesdites parties de relief supérieur étant planes et/ou lesdites parties de relief inférieur étant planes ;
éventuellement les parties de relief supérieur planes et lesdites parties de relief inférieur planes possédant des surfaces différentes.

4. Plateau à double flux selon une quelconque revendication précédente, au moins une parmi :
la partie de relief supérieur possédant une surface totale de fente inférieure à celle des parties de relief inférieur ;
lesdites parties de relief supérieur étant façonnées sous forme de bandes allongées parallèles et
lesdites parties de relief inférieur étant façonnées sous forme de bandes allongées parallèles.

5. Plateau à double flux selon une quelconque revendication précédente, lesdites parties de relief inférieur formant des canaux allongés et lesdites parties de relief supérieur formant des crêtes allongées entre les canaux allongés ;
éventuellement lesdits canaux allongés et lesdits crêtes allongées étant parallèles et alternées dans le sens de la longueur.

6. Plateau à double flux selon une quelconque revendication précédente, lesdites parties d'interconnexion comprenant chacune une ou plusieurs parties planes.

7. Plateau à double flux selon une quelconque revendication précédente, lesdites parties de relief supérieur, lesdites parties de relief inférieur et lesdites parties d'interconnexion formant des parties plates d'au moins une parmi : une onde trapézoïdale ; une onde trapézoïdale isocèle.

8. Plateau à double flux selon une quelconque revendication précédente, chacune des premières soupapes étant des soupapes statiques comprenant un premier orifice et une obstruction partielle fixe du premier orifice, ledit premier orifice et ladite première obstruction partielle fixe du premier orifice étant configurés pour créer deux trajets d'écoulement opposés qui se combinent, et chacune des secondes soupapes étant des soupapes statiques comprenant un second orifice et une seconde obstruction partielle fixe de l'orifice, ledit second orifice et ladite seconde obstruction partielle fixe du premier orifice étant configurés pour créer deux trajets d'écoulement opposés qui se combinent.

9. Plateau à double flux selon une quelconque revendication précédente, chaque partie de relief supérieur fournissant une ou plusieurs premières rangées de premières soupapes, chacune des premières soupapes étant des soupapes statiques comprenant un premier orifice et une obstruction partielle fixe du premier orifice, et lesdits premiers orifices étant orientés dans une première direction et lesdites premières rangées s'étendant dans la première direction ; et chaque partie de relief inférieur fournissant une ou plusieurs secondes rangées de secondes soupapes, chacune des secondes soupapes étant des soupapes statiques comprenant un second orifice et une obstruction partielle fixe du second orifice, lesdits seconds orifices étant orientés dans une seconde direction, orthogonale à la première direction, et les secondes rangées s'étendant dans la première direction.

10. Plateau à double flux selon une quelconque revendication précédente, comprenant des orifices ouverts dans les parties d'interconnexion ;
éventuellement ledit plateau à double flux comprenant au moins deux rangées d'orifices ouverts dans chacune des parties d'interconnexion qui relie une partie de haut relief et une partie de bas relief.

11. Colonne vapeur-liquide (100) pour mise en contact vapeur-liquide comprenant de multiples plateaux à double flux (10) selon une quelconque revendication précédente, lesdits plateaux verticalement adjacents étant tournés à 90 degrés les uns par rapport aux autres ;
éventuellement chaque plateau à double flux (10) étant raccordé à un rebord périphérique (120).

12. Procédé comprenant : la réalisation d'une distillation fractionnée à l'aide d'un ou de plusieurs plateaux à double flux (10) selon l'une quelconque des revendications 1 à 10 ou d'une colonne vapeur-liquide (100) selon la revendication 11 ; et le traitement ultérieur d'au moins une fraction de la distillation fractionnée pour fabriquer, en tant que produit direct du procédé, un produit commercial.
